# DEMANDE DE BREVET EUROPEEN

(11) **EP 0 865 961 A1**
(43) Date de publication de la demande: **23.09.1998**
(21) Numéro de dépôt: 98400601.5
(22) Date de dépôt: 13.03.1998
(51) Int. Cl.: B60N 2/42, B60N 2/00

(54) **Dispositif de fixation d'un siège de véhicule automobile sur le reste de la structure de celui-ci**

(30) Priorité: 17.03.1997 FR 9703203
(71) Demandeur: ECIA - EQUIPEMENTS ET COMPOSANTS POUR L'INDUSTRIE AUTOMOBILE, F-25400 Audincourt (FR)
(72) Inventeur: Bak, Philippe, Michel, 25700 Valentigney (FR); Rudi, Alain Michel, 90850 Essert (FR)
(74) Mandataire: Habasque, Etienne Joel Jean-François

(57) **Abrégé**

Ce dispositif de fixation d'un siège (1) de véhicule automobile sur le reste (2) de la structure de celui-ci, est caractérisé en ce qu'il comporte des moyens (3,4) de fixation à rupture pyrotechnique pour permettre une désolidarisation du siège (1) du reste (2) du véhicule et donc son dégagement de celui-ci.

## Description

La présente invention concerne un dispositif de fixation d'un siège de véhicule automobile sur le reste de la structure de celui-ci.

Actuellement, les dispositifs de fixation de ce type permettent de fixer les sièges sur la caisse ou carrosserie du véhicule et ce d'autant plus solidement que les différentes réglementations concernant la construction des véhicules deviennent de plus en plus exigeantes à propos des déformations et de la rigidité de la cellule de survie des occupants du véhicule en cas d'accident.

Ceci se traduit cependant par un certain nombre d'inconvénients concernant notamment l'évacuation des occupants du véhicule blessés à la suite d'un accident, et en particulier ceux qui sont touchés au niveau de la colonne vertébrale.

En effet, du fait des réglementations mentionnées précédemment, les sauveteurs se trouvent devant des difficultés de plus en plus importantes pour dégager les blessés d'un véhicule accidenté en les manipulant le moins possible.

De telles opérations nécessitent la plupart du temps, la découpe et le retrait de plusieurs portions de la carrosserie du véhicule afin d'avoir accès aux blessés et permettre leur dégagement.

Or, la rigidité de la cellule de survie et la solidité des moyens de fixation des sièges sur le reste de la structure du véhicule constituent une gène pour ces opérations.

Le but de l'invention est donc de résoudre ces problèmes.

A cet effet, l'invention a pour objet un dispositif de fixation d'un siège de véhicule automobile sur le reste de la structure de celui-ci, caractérisé en ce qu'il comporte des moyens de fixation à rupture pyrotechnique pour permettre une désolidarisation du siège du reste du véhicule et donc son dégagement de celui-ci.

Avantageusement, les moyens de fixation à rupture pyrotechnique sont déclenchés par voie électrique et sont raccordés à un connecteur de sécurité adapté pour être relié à une source d'énergie électrique pour leur déclenchement.

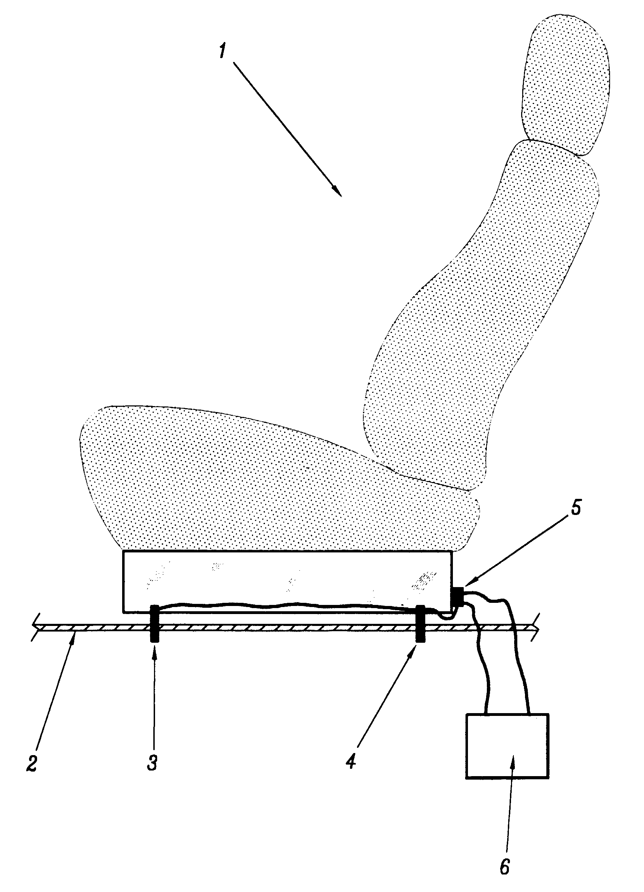

L'invention sera mieux comprise à l'aide de la description qui va suivre, donnée uniquement à titre d'exemple et faite en se référant au dessin annexé, qui représente un schéma synoptique illustrant la structure générale d'un exemple de réalisation d'un dispositif de fixation selon l'invention.

On a en effet représenté sur cette figure, un dispositif de fixation d'un siège de véhicule automobile, désigné par la référence générale 1, sur le reste de la structure de celui-ci, comme par exemple sur le plancher 2 de celui-ci.

Ce siège présente n'importe quelle structure appropriée et le dispositif de fixation selon l'invention comporte en outre des moyens de fixation à rupture pyrotechnique pour permettre une désolidarisation du siège du reste du véhicule et donc son dégagement de celui-ci.

Sur cette figure, les moyens de fixation comprennent par exemple des vis pyrotechniques, telles que les vis 3 et 4, régulièrement réparties entre le siège et le plancher du véhicule, ces vis pyrotechniques permettant d'assurer la fixation du siège sur ce plancher du véhicule et présentant n'importe quelle structure appropriée connue dans l'état de la technique.

On sait en effet que des vis pyrotechniques de ce type sont utilisées dans des différents domaines, tels que par exemple l'industrie aéronautique.

Par ailleurs, ces moyens de fixation à rupture pyrotechnique sont déclenchés par voie électrique et sont raccordés par exemple par des fils à un connecteur de sécurité désigné par la référence générale 5 sur cette figure, adapté pour être relié à une source d'énergie électrique pour leur déclenchement, cette source d'énergie électrique étant désignée par la référence générale 6 sur cette figure et pouvant par exemple être une source externe au véhicule et autonome.

Cette source externe de déclenchement peut alors être à la disposition des sauveteurs en cas d'accident, pour déclencher le fonctionnement des moyens de fixation à rupture pyrotechnique, afin de permettre un dégagement plus rapide et plus facile des occupants de l'habitacle du véhicule.

Cette source d'énergie électrique peut par exemple être une source à activation manuelle pour éviter tout problème d'entretien de celle-ci, cette source pouvant être raccordée par exemple par les sauveteurs au connecteur de sécurité 5, fixé sur le siège ou autre.

Ce connecteur peut par exemple présenter une forme spécifique réservée à cet usage et dont l'utilisation peut être réglementée pour éviter toute tentative de manipulation par des personnes autres que celles habilitées à le faire.

On sait également que ce type de connecteur comporte par exemple des moyens de mise en court-circuit des fils d'alimentation des moyens de fixation pyrotechniques pour éviter leur déclenchement intempestif par exemple dû à l'électricité statique.

On conçoit alors que le dispositif de fixation selon l'invention présente un certain nombre d'avantages, dans la mesure où il permet de désolidariser le siège du reste de la structure et en particulier du plancher du véhicule, ce qui permet de faciliter l'extraction des occupants blessés de l'habitacle d'un véhicule en permettant notamment le dégagement de ces occupants sur leur siège, dans la mesure où le siège peut alors être extrait du véhicule.

Ceci est extrêmement intéressant pour limiter la manipulation de personnes blessées notamment au niveau de la colonne vertébrale en limitant les manipulations de celles-ci pouvant entraîner des lésions graves.

Il va de soi bien entendu que différents modes de réalisation de ce dispositif de fixation peuvent être envisagés et que les moyens pyrotechniques peuvent être constitués par des moyens autres que des vis de fixation du siège sur le plancher du véhicule, ces moyens pouvant par exemple être intégrés directement dans les moyens de piétement du siège ou entre une portion de plancher du véhicule située sous le siège et le reste de celui-ci.

Dans le cas où le siège est un siège à réglage en position axiale dans l'habitacle, les moyens de fixation à rupture pyrotechnique peuvent également être interposés entre des glissières de fixation du siège et le plancher du véhicule.

## Revendications

1. Dispositif de fixation d'un siège de véhicule automobile sur le reste de la structure de celui-ci, caractérisé en ce qu'il comporte des moyens (3,4) de fixation à rupture pyrotechnique pour permettre une désolidarisation du siège (1) du reste (2) du véhicule et donc son dégagement de celui-ci.

2. Dispositif selon la revendication 1, caractérisé en ce que les moyens de fixation à rupture pyrotechnique (3,4) sont déclenchés par voie électrique et sont raccordés à un connecteur de sécurité (5) adapté pour être relié à une source (6) d'énergie électrique pour leur déclenchement.

3. Dispositif selon la revendication 2, caractérisé en ce que la source d'énergie électrique (6) est externe au véhicule.

4. Dispositif selon l'une quelconque des revendications précédentes, caractérisé en ce que les moyens de fixation comprennent des vis (3,4) pyrotechniques de fixation du siège sur le plancher (2) du véhicule.
